Europäisches Patentamt

European Patent Office

Office européen des brevets

(19)

(11) Numéro de publication : **0 298 792 B1**

(12) **FASCICULE DE BREVET EUROPEEN**

(51) Int. Cl.⁵ : **B29C 63/04**

(45) Date de publication du fascicule du brevet :
**26.02.92 Bulletin 92/09**

(21) Numéro de dépôt : **88401414.3**

(22) Date de dépôt : **10.06.88**

(54) Dispositif pour appliquer une pellicule de protection sur une plaque alvéolaire.

(30) Priorité : **23.06.87 FR 8708793**

(43) Date de publication de la demande :
**11.01.89 Bulletin 89/02**

(45) Mention de la délivrance du brevet :
**26.02.92 Bulletin 92/09**

(84) Etats contractants désignés :
**AT BE CH DE ES FR GB GR IT LI LU NL SE**

(56) Documents cités :
**EP-A- 0 157 261**
**DE-A- 1 577 639**
**US-A- 3 389 033**
**US-A- 3 674 590**
**US-A- 4 248 657**

(73) Titulaire : **KAYSERSBERG PACKAGING**
**Route de Lapoutroie**
**F-68240 Kaysersberg (FR)**

(72) Inventeur : **Ruemeli, Robert**
**4, rue des Pâquerettes Sundhoffen**
**F-68280 Andolsheim (FR)**
Inventeur : **Heitzler, Gérard**
**4, rue des Vosges Durrenentzen**
**F-68320 Muntzenheim (FR)**

(74) Mandataire : **David, Daniel**
**KAYSERSBERG Service Propriété Industrielle**
**23 boulevard Georges Clemenceau**
**F-92402 Courbevoie Cédex (FR)**

EP 0 298 792 B1

## Description

L'invention concerne les plaques dites alvéolaires, c'est-à-dire les plaques comportant deux parois planes, espacées, reliées entre elles par des cloisons faisant corps avec elles : les cloisons sont disposées à intervalles réguliers de manière à ménager des cavités ou alvéoles. L'invention vise un dispositif permettant d'appliquer une pellicule protectrice sur les côtés dans lesquels débouchent les cavités, de manière à isoler ces dernières de toute pénétration ou dépôt de matière indésirable, pendant la période s'écoulant entre la fabrication des plaques et leur utilisation.

Une plaque à structure alvéolaire est fabriquée par extrusion d'une matière thermoplastique à travers une filière plane, convenablement conformée de manière à produire deux lames espacées reliées par des cloisons. La mise en forme et le refroidissement de la matière sont assurés par un dispositif de calibrage placé en aval de la filière. A la sortie de la ligne d'extrusion, la bande continue est débitée en panneaux ou plaques, au moyen d'une scie ou d'une cisaille qui la découpe transversalement à son sens de défilement.

Les panneaux obtenus trouvent de nombreuses applications et peuvent être en particulier employés comme éléments de construction pour former des cloisons ou des surfaces de couverture de bâtiments ou autres. On utilise alors de préférence une matière rigide et translucide telle que le polycarbonate.

La ligne d'extrusion est équipée habituellement d'un système de pose d'une pellicule protectrice sur chacune des deux faces de la plaque. Il s'agit le plus souvent d'une pellicule en matière plastique souple, polyéthylène par exemple, qui a pour objet de protéger temporairement la surface des éraflures et des impacts susceptibles de se former pendant les diverses manipulations auxquelles le produit est soumis avant son emploi définitif. En outre, pour éviter que des saletés, de la poussière ou de l'eau de condensation ne viennent se loger à l'intérieur des cavités pendant cette période, on obture, jusqu'à présent, ces dernières au moyen d'une bande adhésive que l'on rapporte manuellement sur la plaque, en fin du processus de fabrication, à la sortie de la ligne d'extrusion.

L'invention a pour but de s'affranchir de cette opération contraignante et délicate, en obturant les cavités au moyen de la pellicule avec laquelle on recouvre la surface des plaques.

Le brevet DE-A-1577639 porte sur le recouvrement en continu des deux faces de plaques, destinées à la fabrication de meubles notamment, au moyen de feuilles en matière plastique. La méthode décrite consiste à entraîner les plaques, en ligne, dans un mouvement de translation plan avec un écart déterminé entre elles. On applique ensuite sur chacune des deux faces une pellicule en matière plastique que l'on découpe à chaque intervalle entre les plaques au moyen de lames, montées sur un support oscillant de façon à accompagner leur déplacement. Il se forme nécessairement des rabats susceptibles d'être utilisés pour recouvrir les bords des plaques. Ce brevet ne donne toutefois pas de solution au problème de fermeture des cavités d'une plaque alvéolaire par des moyens mécaniques commandés automatiquement.

Le dispositif conforme à l'invention pour appliquer une pellicule de protection sur des plaques du type à deux parois de couverture planes, reliées par des cloisons faisant corps avec elles et ménageant des cavités longitudinales, comprend :

– un moyen pour entraîner lesdites plaques en ligne dans un mouvement de translation plan, avec un écartement entre deux plaques successives (a, b) d'une distance e supérieure à leur épaisseur,

– un moyen pour appliquer une pellicule de matière souple sur une paroi de couverture de la première plaque (a) puis de la deuxième plaque (b),

– un moyen de découpe transversale de la pellicule dans l'intervalle ménagé entre les plaques (a et b) de manière à obtenir au moins une partie libre formant rabat sur une plaque (a).

Le dispositif est caractérisé en ce que ledit moyen de découpe de la pellicule entre deux plaques successives est monté sur un chariot, mobile dans le plan des plaques et pourvu de moyens pour le solidariser temporairement aux dites deux plaques, lequel comprend également un moyen pour appliquer et sceller ledit rabat, sur le bord de la plaque (a) de manière à en recouvrir les cavités.

En écartant d'une distance suffisante les deux plaques et en procédant à une découpe appropriée de la pellicule dans l'intervalle ainsi ménagé, on obtient deux rabats avec lesquels on peut recouvrir les cavités des deux côtés en vis-à-vis des plaques.

Cette disposition offre l'avantage de permettre l'automatisation de la fermeture des alvéoles, conduisant à une économie à la fois de main-d'oeuvre et de matière. Par ailleurs, si celle-ci est réalisée immédiatement après la pose de la pellicule protectrice, on réduit le temps pendant lequel les alvéoles sont à l'air libre et au cours duquel ils peuvent s'encrasser.

L'invention sera mieux comprise et d'autres caractéristiques apparaîtront à la lecture de la description qui suit d'un mode de réalisation, non limitatif, d'un dispositif de mise en oeuvre du procédé, illustrée par les dessins annexés, sur lesquels :

La figure 1 représente une plaque alvéolaire.

La figure 2 représente schématiquement le mode d'enveloppage de la plaque selon l'art antérieur.

La figure 3 représente schématiquement le mode d'enveloppage de la plaque conformément à l'invention.

La figure 4 représente schématiquement les diverses sections du dispositif de mise en oeuvre du procédé.

La figure 5 représente en détail la deuxième section du dispositif de la figure 4.

La figure 6 représente en détail la quatrième section du dispositif de la figure 4.

La figure 7 illustre les différentes étapes du procédé.

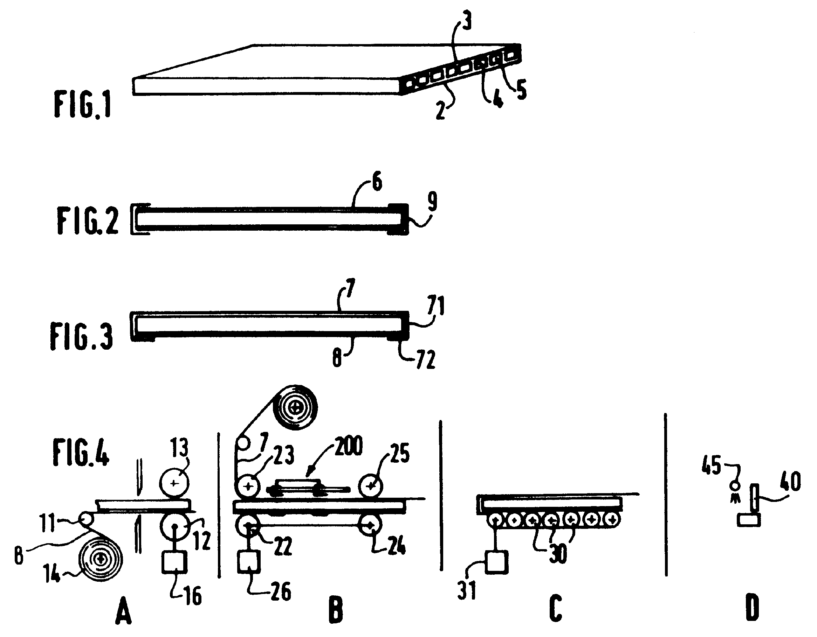

On a représenté à la figure 1, une plaque du type en question. Elle comporte deux parois de couverture planes 2, 3, reliées par des cloisons régulièrement espacées 4 de manière à définir des cavités longitudinales 5. Selon l'épaisseur et l'application, on peut prévoir une paroi intermédiaire supplémentaire consolidant la structure.

Dans les réalisations de l'art antérieur, on protège, figure 2, les plaques sortant de la ligne d'extrusion au moyen d'une pellicule 6 en matière plastique souple. Leurs extrémités sont également recouvertes d'une bande adhésive 9 obturant les cavités longitudinales. Cette bande est déposée manuellement.

Conformément à l'invention, figure 3, on applique, sur l'une des faces aux dimensions les plus grandes de la plaque, une pellicule 7 en matière souple, dont la longueur est suffisante pour former au moins un rabat 71 de couverture de l'une des extrémités. Le rabat peut être pourvu d'une patte 72 permettant sa solidarisation à la pellicule 8 recouvrant l'autre face de la plaque.

La fixation peut être assurée par tout moyen, collage ou soudage.

La figure 4 représente schématiquement les différentes sections du dispositif par le moyen duquel les rabats sont formés et appliqués.

La première section, A, disposée immédiatement en aval de la ligne d'extrusion qui n'a pas été représentée, comporte un élément de coupe de la plaque sortant de la ligne d'extrusion sous forme d'une bande continue. Chaque plaque est ainsi débitée à la longueur voulue. L'élément de coupe, selon l'épaisseur ou la rigidité du matériau peut être une simple cisaille ou une scie rotative montée sur un chariot se déplaçant transversalement à la direction d'avancement de la plaque. Tout autre moyen peut convenir également. On rappelle que les cavités, du fait du procédé même d'extrusion, sont orientées dans le sens de défilement.

Une paire de cylindres superposés 12, 13 entraînés par un moteur 16 assure le convoyage du panneau ou de la plaque qui vient d'être débité.

Généralement, dans les installations de l'art antérieur, des bobines de film en matière souple, par exemple en polyéthylène, sont disposées de part et d'autre de la plaque, en amont de l'élément de coupe, et des rouleaux applicateurs en assurent le dépôt sur chacune des deux faces.

Dans le procédé de l'invention, on conserve le rouleau inférieur 11 qui renvoie le pellicule 8 depuis sa bobine d'alimentation.

Le deuxième section, B, est disposée en aval de la première ; elle comporte, à l'intérieur d'un bâti non représenté, deux paires de rouleaux d'entraînement 22, 23 et 24, 25, espacées l'une de l'autre.

Ces rouleaux sont synchronisés et entraînés à une vitesse contrôlée par un moteur 26.

Les rouleaux supérieurs 23, 25 sont montés sur des supports mobiles verticalement et rappelés vers le bas par des vérins, non représentés sur ce schéma, pour permettre l'ajustement de l'intervalle entre rouleaux en fonction de l'épaisseur des plaques à entraîner.

Le premier rouleau supérieur 23, à l'entrée de la section B, sert de renvoi à une pellicule de matière souple, qui est de préférence la même que précédemment et qui est alimentée depuis une bobine.

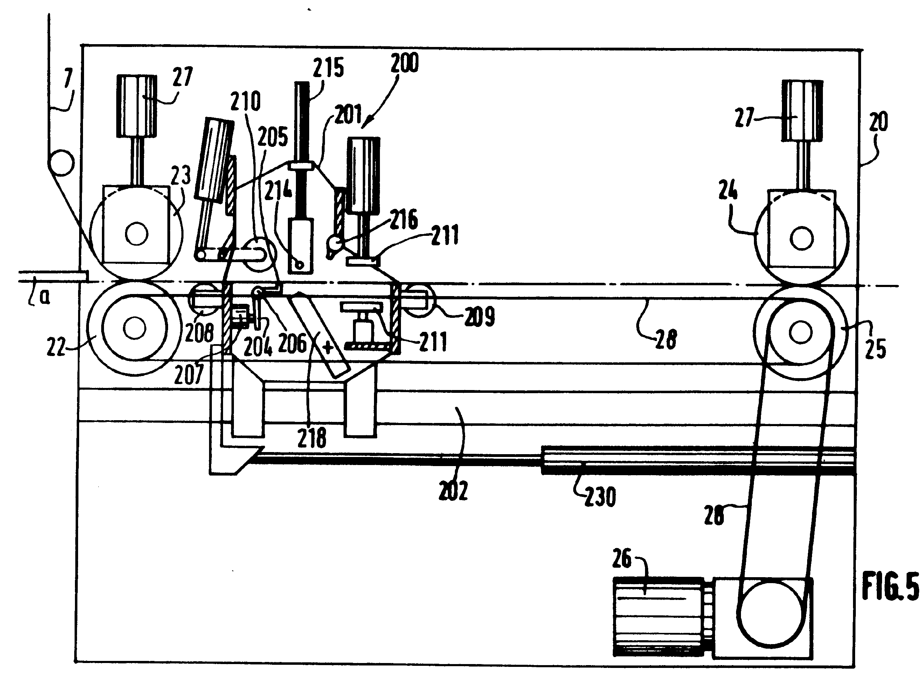

Un chariot 200, pouvant se déplacer parallèlement au plan de translation des plaques entre la paire de rouleaux amont et la paire aval, est monté sur le bâti de la section B. Ce chariot 200 est équipé de divers moyens assurant la fermeture des cavités débouchant à l'extrémité amont des plaques qui passent par la section B. Sa description est développée plus loin en relation avec la figure 5.

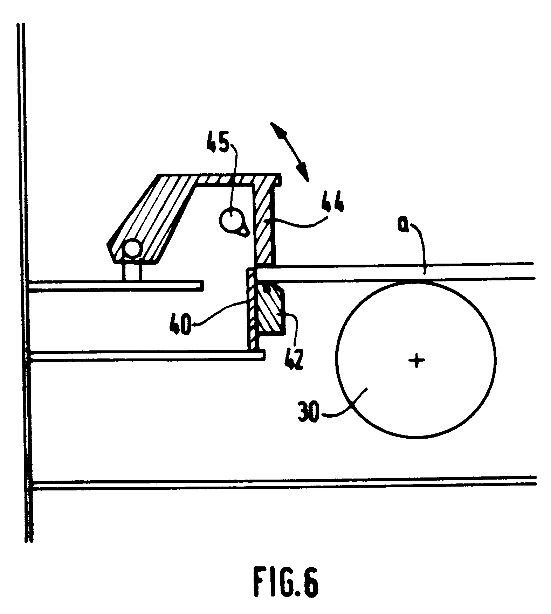

La section C, en aval de la précédente, est pourvue de rouleaux de convoyage 30 entraînés par un moteur 31. En bout de cette section de transfert, la dernière section du dispositif, la section D, comporte un élément de butée 40 et des moyen de fermeture des cavités débouchant dans la tranche aval des plaques. Leur description est développée plus loin en relation avec la figure 6.

En se reportant maintenant à la figure 5, on reconnaît, à l'intérieur d'un bâti 20, la première paire de rouleaux superposés 22, 23 dont le rouleau supérieur 23 est mobile verticalement et vient appuyer sur la plaque passant dans l'intervalle, sous l'action des vérins 27. A l'autre extrémité du bâti 20, on retrouve la seconde paire de rouleaux 24 et 25 identique à la première. Un système de courroies 28 commandées par le moteur 26 assure l'entraînement en synchronisme des rouleaux.

Le chariot 200 est monté dans l'intervalle ménagé entre les rouleaux. Il comporte lui-même un châssis 201 équipé de paliers supports coulissant le long de rails 202 solidaires du bâti et parallèles à la direction de déplacement des plaques.

Le chariot comporte deux rangées de rouleaux 208, 209 disposés, en travers, de part et d'autre du châssis : ces rouleaux servent de supports aux plaques qui le traversent.

Une griffe 204, en forme d'équerre est montée pivotante sur le chariot autour d'un axe transversal 206, elle comporte à une extrémité un doigt formant butée 205, susceptible de venir se placer dans le passage des plaques lorsque la griffe est en position active ou haute, et de s'escamoter en libérant le même passage en position basse. Les deux positions sont commandées par un vérin 207, associé à un ressort de rappel, agissant sur le bras inférieur de la griffe 204.

Des rouleaux presseurs 210, commandés par vérins, coopèrent avec la griffe et garantissent que la plaque ne glisse pas par dessus la butée quand cette dernière est en position active. Des pinces 211, constituées de barres transversales, superposées, de part et d'autre du passage, et commandées par des vérins, peuvent prendre une position rétractée, comme cela est réprésenté sur la figure, et une position active où elles enserrent la plaque qui se trouve dans le passage et l'immobilisent par rapport au chariot.

Entre les deux moyens de préhension ou de blocage que constituent la griffe 204 et les pinces 211, se trouve un fil chauffant 214 s'étendant en travers du chariot, le fil est tendu entre deux bras mobiles verticalement sous l'action de vérins 215.

Une rampe de buses d'insufflation d'air 216 est disposée en aval, parallèlement au fil chauffant. Les buses sont alimentées par un collecteur commun et sont inclinées vers le bas.

Une barre transversale 218 est montée entre deux leviers pivotants sous le plan de translation des plaques. Les leviers sont commandés par vérins entre deux positions : une première position, rétractée, représentée sur la figure, où la barre 218 est éloignée du plan, et une seconde position, où les leviers sont verticaux, et où la barre vient affleurer le même plan.

La barre 218 comporte dans sa longueur un élément chauffant capable d'assurer une soudure.

Un vérin 230 solidaire du bâti 20 a pour fonction de ramener le chariot depuis la position aval jusqu'à sa position de départ du cycle, à l'amont.

La figure 6, représente le poste de fermeture des alvéoles de la seconde extrémité des plaques. Contrairement au précédent, ce poste est fixe, il est situé immédiatement en aval de la section C et de son système de convoyage 30.

Une butée 40 est disposée en travers de la trajectoire des plaques entraînées par le système 30. En léger décrochement par rapport à la butée 40, se trouve une barre transversale 42 pourvue d'un élément chauffant pour soudure. La barre 42 affleure le plan de translation des plaques.

Une entretoise 44 est montée pivotante autour d'un axe transversal, et est commandée par vérins entre deux positions : une première position relevée, et une seconde position représentée sur la figure où elle vient se placer dans le même plan vertical que la barre 42. L'espace ménagé entre la barre et l'entretoise correspond à l'épaisseur des plaques.

Une rangée de buses 45, disposée à proximité de l'entretoise, insuffle des jets d'air en direction de la plaque à l'opposé de son sens de déplacement.

Dans une variante, la butée peut basculer pour laisser le passage aux plaques, en cas de nécessité.

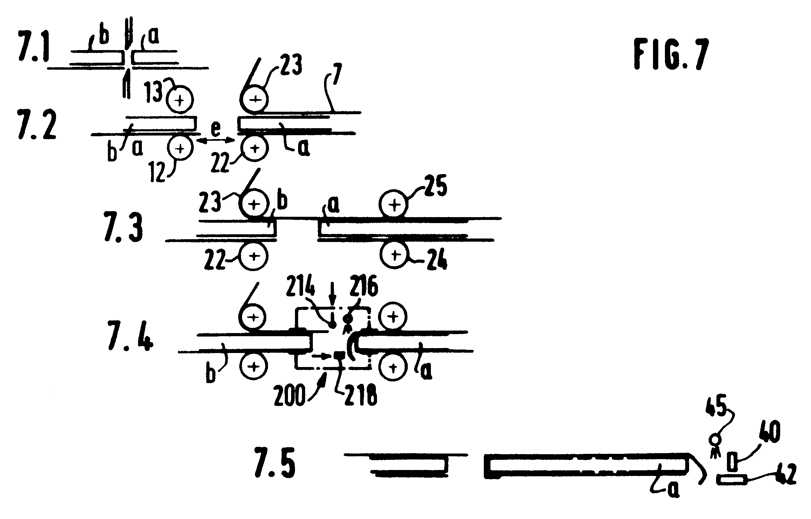

Pour la description du fonctionnement du dispositif qui suit, on pourra se reporter également à la figure 7 qui illustre de déroulement du procédé pour deux plaques successives a et b.

Tout-à-fait en amont, l'élément de découpe débite les plaques les unes après les autres : a, b, etc... depuis la bande continue sortant de la ligne d'extrusion, figure 7.1. Les plaques reçoivent une pellicule protectrice 8 sur la face inférieure avant d'être découpées. Dans cette section, la plaque a qui a été détachée de la bande, se déplace à la même vitesse que cette dernière. L'écartement entre leurs bords est alors faible.

Les plaques passent ensuite dans la section suivante.

On crée entre elles un espacement e de valeur déterminée, au moins égale à l'épaisseur des plaques, en accélérant pendant un court instant la plaque a qui se trouve dans le bâti de la section B, avant que la plaque suivante, b, n'y pénètre à son tour, figure 7.2. Ceci peut être réalisé très simplement au moyen d'un détecteur de position de plaque, une cellule photo-électrique par exemple, qui va agir sur la commande du moteur 26 d'entraînement des rouleaux de la section.

La pellicule de couverture 7 est appliquée en continu sur la face supérieure des plaques, à leurs entrée dans la section, par le rouleau de tête 23. Dans la situation de la figure 7.2, le chariot se trouve encore en position aval où se termine le cycle précédent. Il est ramené en position de départ au plus tard au moment où la plaque b vient en prise avec les rouleaux 22, 23, figure 7.3.

Celle-ci passe alors dans le chariot et son bord aval vient appuyer contre l'élément de butée 205 de la griffe 204 qui a été relevée entre-temps. Les rouleaux presseurs 210 ont été mis en position basse, et exercent sur la plaque une pression suffisante pour éviter tout risque de dérapage.

Les pinces 211, commandées par un moyen de détection approprié, se referment dans le même temps sur la plaque a. Le chariot et les plaques a et b forment alors un ensemble solidaire, entraîne à l'unisson par les deux paires de rouleaux de la section.

Les différentes opérations conduisant à la fermeture de l'extrémité amont de la plaque a, sont exécutées automatiquement pendant cette étape de transfert. Le fil chauffant 201 qui se trouve sensiblement au milieu de l'intervalle e, recouvert par le film 7, est déplacé vers le bas et découpe celui-ci en deux parties libres 71 formant des rabats. L'air insufflé par la rampe 216 repousse alors le film contre la tranche amont de la plaque a. On commande ensuite le relèvement de la barre 218 qui vient se mettre en position sous le bord du panneau en ramassant au passage l'extrémité du film qu'il vient plaquer contre la face inférieure et souder au film protecteur de celle-ci par mise en action de son élément chauffant. On augmente légèrement la pression des vérins actionnant la pince supérieure 211 pour améliorer le contact entre les deux films et garantir ainsi que l'opération de soudage s'effectue dans de bonnes conditions. Cette succession d'opérations est illustrée à la figure 7.4.

A la fin de cette étape, le chariot est parvenue en fin de course. On désolidarise le panneau d'avec le chariot en commandant le dégagement de la griffe, des rouleaux presseurs et des pinces. On relève le fil chauffant et on rabat la barre inférieure.

La plaque a, ainsi libérée, passe dans la section suivante pendant que le chariot est ramené dans sa position de départ par le vérin 230 pour un nouveau cycle qui va conduire à la fermeture amont des cavités de la plaque suivante, b.

Le système de convoyage 30 assure un déplacement rapide de la plaque a de façon à augmenter l'écart avec le panneau suivant, et lui laisser le temps d'effectuer les différentes opérations qui suivent.

La plaque a vient, en fin de course, s'arrêter contre la butée 40. Auparavant, figure 7.5, un moyen de détection, non représenté, a déclenché l'insufflation d'air par la rampe de buses 45 pour amener la partie flottante du film contre le bord aval de la plaque. Celle-ci a ensuite glissé sur la barre 42 au contact de laquelle l'extrémité du film a été ramené contre sa face inférieure. Quand la plaque vient s'arrêter en butée contre l'élément 40, l'élément chauffant est mis sous tension, et l'entretoise 44 est rabattue sur la plaque, au droit de la zone de soudure pour y exercer la pression nécessaire à la réalisation d'une liaison de bonne qualité.

Quand l'opération est terminée, la barre 44 est relevée, et la plaque est évacuée vers un système de palettisation par des moyens de préhension appropriés.

On peut prévoir qu'en cas de difficulté sur la ligne, la butée 41 puisse s'escamoter et permettre l'évacuation de la plaque au delà du poste fixe, de manière à éviter tout bourrage.

Le dispositif qui vient d'être décrit n'est qu'une illustration d'un mode de réalisation de l'invention. Des variantes sont envisageables sans que l'on sorte pour autant du cadre de l'invention.

Ainsi par exemple, le chariot pourrait être équipé d'un système de fermeture supplémentaire pour obturer simultanément les bords en vis à vis de deux plaques successives. Le poste fixe ne serait plus nécessaire. Toutefois, le mode de réalisation qui vient d'être décrit en détail est préférable dans la mesure où il ne risque pas d'entraîner des perturbations dans le processus d'extrusion.

**Revendications**

1. Dispositif pour appliquer une pellicule de protection sur des plaques du type à deux parois de couverture planes (2, 3), reliées par des cloisons (4) faisant corps avec elles et ménageant des cavités longitudinales (5), comprenant :
   – un moyen pour entrainer lesdites plaques en ligne dans un mouvement de translation plan, avec un écartement entre deux plaques successives (a, b) d'une distance e supérieure à leur épaisseur,
   – un moyen pour appliquer une pellicule de matière souple sur une paroi de couverture de la première plaque (a) puis de la deuxième plaque (b),
   – un moyen de découpe transversale de la pellicule (7) dans l'intervalle ménagé entre les plaques (a et b) de manière à obtenir au moins une partie libre (71) formant rabat sur une plaque (a), caractérisé en ce que ledit moyen de découpe (214) de la pellicule entre deux plaques successives est monté sur un chariot (200), mobile dans le plan des plaques et pourvu de moyens (204, 211) pour le solidariser temporairement aux dites deux plaques, lequel comprend également un moyen pour appliquer et sceller ledit rabat (71) sur le bord de la plaque (a) de manière à en recouvrir les cavités.

2. Dispositif selon la revendication précédente, caractérisé en ce que le chariot (200) comporte un moyen (216) de soufflage d'air pour repousser le rabat (71) contre le côté correspondant de ladite plaque.

3. Dispositif selon la revendication précédente, caractérisé en ce que le chariot (200) comporte une barre transversale (218) pour rabattre l'extrémité du rabat (71) sur la surface opposée de ladite plaque à la face recouverte par la pellicule.

4. Dispositif selon l'une des revendications précédentes, caractérisé en ce qu'il comporte un moyen permettant de régler la distance séparant deux plaques successives.

5. Dispositif selon la revendication précédente, caractérisé en ce que ledit moyen est constitué de deux organes d'entraînement des plaques disposés l'un à la suite de l'autre et commandés séparément.

6. Dispositif selon l'une des revendications précédentes, caractérisé en ce qu'il comporte également un poste fixe de scellage de la deuxième partie libre de la pellicule, formant rabat, obtenue quand on écarte les plaques d'une distance suffisante pour permettre la formation d'un rabat sur chacune desdites plaques successives.

7. Dispositif selon la revendication précédente, caractérisé en ce qu'il comporte une butée (40), un moyen (45) pour repousser le rabat contre le côté correspondant de la plaque et un moyen pour solidariser ledit rabat à la plaque.

## Patentansprüche

1. Vorrichtung zum Aufbringen einer Schutzfolie auf Platten mit zwei ebenen Deckwänden (2, 3), die durch Trennwände (4) verbunden sind, welche mit ihnen einen Körper bilden und längs verlaufende Hohlräume (5) begrenzen, mit:
– einer Einrichtung zum Antreiben der Platten längs einer Linie in einer ebenen translationsförmigen Bewegung, wobei zwischen aufeinanderfolgenden Platten (a, b) ein Abstand (e) vorhanden ist, der größer als ihre Dicke ist,
– einer Einrichtung zum Aufbringen einer Folie aus biegsamem Material auf einer Deckwand der ersten Platte (a) und dann der zweiten Platte (b),
– eine Einrichtung zum Durchschneiden der Folie (7) in dem Zwischenraum zwischen den Platten (a und b) in Querrichtung, derart, daß mindestens ein freier Abschnitt (71) entsteht, der eine Umschlagklappe für die Platte (a) bildet,
dadurch gekennzeichnet, daß die Einrichtung (214) zum Durchschneiden der Folie zwischen zwei aufeinanderfolgenden Platten auf einem Schlitten (200) angebracht ist, der in der Ebene der Platten beweglich und mit Mitteln (204, 211) versehen ist, durch die er kurzzeitig mit den beiden Platten verbindbar ist, wobei dieser ferner eine Einrichtung zum Aufbringen und Anheften der Umschlagsklappe (71) am Rand der Platte (a) aufweist, um dadurch die Hohlräume zu verschließen.

2. Vorrichtung nach dem vorhergehenden Anspruch, dadurch gekennzeichnet, daß der Schlitten (200) eine Einrichtung (216) zum Ausblasen von Luft aufweist, um die Umschlagklappe (71) gegen die entsprechende Seite der Platte anzudrücken.

3. Vorrichtung nach dem vorhergehenden Anspruch, dadurch gekennzeichnet, daß der Schlitten (200) eine quer verlaufende Stange (218) aufweist, durch die das Ende der Umschlagsklappe (71) auf die Seite der Platte umschlagbar ist, die der von der Folie bedeckten Seite gegenüberliegt.

4. Vorrichtung nach einem der vorhergehenden Ansprüche, dadurch gekennzeichnet, daß sie eine Einrichtung aufweist, durch die der Abstand zwischen zwei aufeinanderfolgenden Platten regelbar ist.

5. Vorrichtung nach dem vorhergehenden Anspruch, dadurch gekennzeichnet, daß diese Einrichtung von zwei Antriebsorganen für die Platten gebildet wird, von denen die eine hinter der anderen angeordnet ist und die getrennt gesteuert werden.

6. Vorrichtung nach einem der vorhergehenden Ansprüche, dadurch gekennzeichnet, daß sie ferner eine stationäre Stelle zum Anheften des eine Umschlagklappe bildenden zweiten freien Abschnittes der Folie aufweist, der entsteht, wenn die Platten um eine Strecke auseinanderbewegt werden, die ausreicht, um die Bildung einer Umschlagklappe an jeder der aufeinanderfolgenden Platten zu ermöglichen.

7. Vorrichtung nach dem vorhergehenden Anspruch, dadurch gekennzeichnet, daß sie einen Anschlag (40), ein Mittel (45) zum Zurückstoßen der Umschlagklappe gegen die entsprechende Seite der Platte sowie ein Mittel zum Verbinden der Umschlagklappe mit der Platte aufweist.

## Claims

1. A device for applying a protective film to plates of the type having two plane covering walls (2, 3), connected by partitions (4) integral therewith and forming longitudinal cavities (5), comprising:
– a means for moving these plates in a line in a plane translation movement with a spacing between two successive plates (a, b) of a distance e greater than their thickness,
– a means for applying a film of flexible material to a covering wall of the first plate (a) and then the second plate (b),
– a means for the transverse cutting of the film (7) in the space between the plates (a) and (b) in order to obtain at least one free portion (71) forming a flap over a plate (a),
characterized in that the means (214) for cutting the film between two successive plates is mounted on a carriage (200) moving in the plane of the plates and provided with means (204, 211) for joining it temporarily to these two plates, which carriage also comprises a means for applying and sealing the flap (71) on the edge of the plate (a) so as to cover its cavities.

2. A device as claimed in the preceding claim, characterized in that the carriage (200) comprises a means (216) for blowing air so as to push the flap (71) against the corresponding edge of the plate.

3. A device as claimed in the preceding claim, characterized in that the carriage (200) comprises a transverse bar (218) for folding the end of the flap (71) over the surface of the plate opposite the surface covered by the film.

4. A device as claimed in one of the preceding claims, characterized in that it comprises a means allowing the spacing separating two successive plates to be adjusted.

5. A device as claimed in the preceding claim, characterized in that this means is formed by two plate driving members disposed one after the other and controlled separately.

6. A device as claimed in one of the preceding claims, characterized in that it also comprises a fixed station for sealing the second free portion of the film, forming a flap, obtained when the plates are spaced by a distance sufficient to allow the formation of a flap on each of the successive plates.

7. A device as claimed in the preceding claim, characterized in that it comprises a stop (40), a means (45) for folding the flap against the corresponding edge of the plate and a means for joining this flap to the plate.

EP 0 298 792 B1

**FIG.1**

3
2
4
5

**FIG.2**

6
9

**FIG.3**

7
71
8
72

**FIG.4**

A
13
11
8
14
12
16

B
7
23
200
25
22
24
26

C
30
31

D
45
40

A        B        C        D

FIG.5

FIG.6

FIG.7